# EUROPEAN PATENT SPECIFICATION

(11) **EP 0 781 605 B1**
(45) Date of publication and mention of the grant of the patent: **12.05.1999**
(21) Application number: 96203600.0
(22) Date of filing: 18.12.1996
(51) Int. Cl.: B01J 39/04, C08F 6/08, C08C 2/04

(54) **Removal of metal compounds from an acid solution**
Entfernung von Metallverbindungen aus einer sauren Lösung
Elimination des composés de métaux d'une solution acide

(30) Priority: 28.12.1995 US 9520
(43) Date of publication of application: 02.07.1997
(73) Proprietor: SHELL INTERNATIONALE RESEARCH MAATSCHAPPIJ B.V., 2596 HR Den Haag (NL)
(72) Inventor: Diaz, Zaida, Houston, Texas 77077 (US); Wilkey, John David, Houston, Texas 77068 (US)

(56) References cited:
- GB-A- 1 224 080
- US-A- 3 780 138
- US-A- 5 391 663

## Description

The present invention relates to a process for removing metal compounds from an acid solution. In particular the present invention related to a process for removing an alkali metal compound from an acid solution also containing nickel and aluminium compounds. More specifically, this invention relates to a process for removing metal compounds from an acid solution which was used to remove an alkali metal compound from a polymer cement.

Acids are often used to remove catalyst residues and alkali metal compounds from polymer cements. Strong acids such as sulphuric acid and phosphoric acid are particularly effective at washing hydrogenation catalyst residues (nickel and aluminium) and alkali metal compounds (lithium) from polymer cements. Recycle of the acid requires that it be treated by a process such as ion exchange to remove the catalyst residues and alkali metal compounds. It has been found that the basic lithium salts may cause emulsions during wash, and that one way to avoid emulsification is to use fairly concentrated acid. Most ion exchange resins, however, have a very low selectivity for removing lithium. As a result, removal of lithium from an acid solution by ion exchange in the presence of nickel and aluminium is very difficult. It is even more difficult if the wash step requires the use of a concentrated acid.

An effective process has now been developed which enables an improved removal of an alkali metal compound from an acid solution also containing nickel and aluminium compounds.

Accordingly, the present invention provides a process for removing an alkali metal compound from an acid solution also containing nickel and aluminium compounds comprising:
i) contacting the acid solution with a first ion exchange resin functional to remove the nickel and aluminium compounds from the acid solution; and
ii) contacting the acid solution so obtained with a second ion exchange resin functional to remove the alkali metal compound from the acid solution.

In this way the removal of an alkali metal compound (lithium) from an acid solution containing nickel and aluminium compounds can be improved. It has further been found that several ion exchange resins have a higher selectivity for removing lithium than others have. These are for instance AMBERLYST 35 and AMBERLYST 15 (trademarks of Rohm and Haas for strong acid resins, H+ form) and BAYER OC 1501 (a trademark of Miles for a strong acid resin, H+ for). It has also been found that lithium removal from an acid solution is improved in a process where nickel and aluminum are removed first on a resin such as AMBERLITE 200C (a trademark of Rohm and Haas for a strong acid resin), and lithium is removed next on one of the second ion exchange resins having a high selectivity for lithium. The second ion exchange resin is more selective for removing the alkali metal compound from the acid solution than the first ion exchange resin is.

The acid solutions in accordance with the present invention were preferably used to remove an alkali metal compound from a polymer cement. More preferably, the acid solutions are used to remove an alkali metal compound from a low viscosity functionalised polymer cement.

Low viscosity functionalised polymers can be made by anionic polymerisation of conjugated diene hydrocarbons with lithium initiators as is well known (see for instance U.S. Patents Nos. 4,039,503 and Re. 27,145). Polymerisation commences with a monolithium, dilithium, or polylithium initiator which builds a living polymer backbone at each lithium site. Typical living polymer structures containing polymerised conjugated diene hydrocarbons are:
X-B-Li
X-A-B-Li
X-A-B-A-Li
Li-B-Y-B-Li
Li-A-B-Y-B-A-Li
wherein B represents polymerised units of one or more conjugated diene hydrocarbons such as butadiene or isoprene. A represents polymerised units of one or more vinyl aromatic compounds such as styrene. X is the residue of a monolithium initiator such as sec-butyllithium, and Y is the residue of a dilithium initiator such as the diadduct of sec-butyllithium and m-diisopropenylbenzene. Some structures, including those pertaining to polylithium initiators or random units of styrene and a conjugated diene, generally have limited practical utility although known in the art.

The anionic polymerisation of the conjugated diene hydrocarbons is typically controlled with structure modifiers such as diethylether or glyme (1,2-diethoxyethane) to obtain the desired amount of 1,4-addition. As described in Re 27,145, the level of 1,2-addition of a butadiene polymer or copolymer can greatly affect elastomeric properties after hydrogenation.

Dilithium initiation with the diadduct of sec-butyllithium (s-BuLi)and m-diisopropenylbenzene also requires presence of a non-reactive coordinating agent such as diethyl ether, glyme, or triethyl amine, otherwise monolithium initiation is achieved. Ether is typically present during anionic polymerisation as discussed above, and the amount of ether typically needed to obtain specific polymeric structures is sufficient to provide dilithium initiation.

Alternatively, anionic polymerisation of conjugated dienes may be performed using protected functional initiators (PFI) as for instance described in U.S. Patents 5,391,663 and 5,146,168.

Anionic polymerisation is often terminated by addition of water to remove the lithium as lithium hydroxide (LiOH) or by addition of an alcohol (ROH) to remove the lithium as a lithium alkoxide (LiOR). For polymers having terminal functional groups, the living polymer chains are preferably terminated with hydroxyl, carboxyl, phenol, epoxy or amine groups by reaction with ethylene oxide, carbon dioxide, a protected hydroxystyrene monomer, ethylene oxide plus epichlorohydrin, or the amine compounds listed in U.S. Patent 4,791,174, respectively.

The termination of living anionic polymers to form functional end groups is for instance described in U.S. Patents 4,417,029, 4,518,753 and 4,753,991. Of particular interest for the present invention are terminal hydroxyl, carboxyl, phenol, epoxy and amine groups. Such polymers with number average molecular weights between 1000 and 20,000, as measured by gel permeation chromatography, are low viscosity functionalised polymers.

Hydrogenation of at least 90%, preferably at least 95%, of the unsaturation in low molecular weight butadiene polymers is achieved with nickel catalysts as for instance described in U,S. Patents Re. 27,145 and 4,970,254. The preferred catalyst is a mixture of nickel 2-ethylhexanoate and triethylaluminium.

It is preferable to extract the nickel catalyst after hydrogenation by stirring the polymer cement with a strong acid, for instance aqueous phosphoric acid (2-30 percent by weight) at a volume ratio of 0.33 to 0.50 parts aqueous acid to 1 part polymer solution, at 50 degrees C for 30-60 minutes while sparging with a mixture of oxygen in nitrogen. Alternatively, aqueous sulphuric acid will suffice to remove the hydrogenation catalyst. It will be understood that a polymer cement is the resulting mixture of a polymerisation reaction which normally comprises components such as polymer formed, organic solvent(s), non-converted monomer, polymerisation initiator, catalyst residues etc.

The present invention relates to removal of an alkali metal compound post hydrogenation. The polymerisation process uses a lithium initiator, which is preferably a protected functional initiator (PFI). PFI diols contain one mole of lithium per mole of polymer, and the termination step produces a lithium salt. The presence of the lithium salt may affect hydrogenation performance, although the magnitude of this impact is not yet fully understood. In cases where hydrogenation performance is acceptable, the lithium salt may be removed post-hydrogenation in the same step used to remove the hydrogenation catalyst, which contains nickel and aluminum.

As mentioned hereinbefore, removal of the lithium salts from the polymer cement post-hydrogenation may be accomplished by washing the cement with a strong acid such as phosphoric acid or sulphuric acid. This transfers the cations to the acid solution, which must then be treated to remove the salts before recycling. Although, only solutions of strong acids have been mentioned hereinbefore, it should be noted that the present concept also applies to solutions of weak acids, for instance solutions of citric acid and acetic acid. The AMBERLYST 35 resin is preferred and has higher capacity and selectivity for lithium than AMBERLITE 200C (AMBERLYST 35 and AMBERLITE 200C are trademarks of Rohm and Haas). A two bed configuration, in which a bed of AMBERLITE 200C is followed by a bed of AMBERLYST 35, achieves the best compromise between resin selectivity, capacity, and regenerability in a fixed bed process. The process is preferably run at a temperature within the range of 21 to 77°C, preferably 50 to 65°C. The acid is preferably in a concentration of 0.2 to 40%w and the lithium salt at a concentration of 0.005 to 5%w. The process is preferably run at a velocity of 2 bed volumes per hour.

Any alkali metal compound commonly found in a polymer cement when an alkali metal compound is used as the catalyst or initiator can be removed from the polymer cement. These include alkali metal hydrides, alkali metal alkoxides and alkali metal hydroxides.

The invention will now be illustrated by means of the following Examples.

### EXAMPLES

### Example 1

To test the invention, two column experiments were carried out with 20%w phosphoric acid containing 280 ppm Li and 100 ppm of Ni and Al each. In the first experiment a 20cc bed of AMBERLITE 200C was used. In the second experiment, the bed consisted of 10cc of AMBERLITE 200C followed by 10cc of AMBERLYST 35. All other parameters such as flow rate, temperature, bed L/D, etc. were the same in both experiments. The results obtained in these tests show that using the two resins in series increased the volume of acid treated before lithium breakthrough from 2 bed volumes to 6 bed volumes.

### Example 2

The higher lithium selectivity of AMBERLYST 35, AMBERLYST 15, and BAYER OC 1501 was identified in isotherm tests. Screening experiments to select the best resins consisted of shake tests to equilibrate the resin or adsorbent with a 2%w phosphoric acid solution containing 230 ppm lithium. The acid to adsorbent weight ratio in these tests was 100:1 and the temperature was 22°C. After equilibration, the residual lithium in the acid solution was determined by ion chromatography. From these results, the most effective materials for lithium removal were identified. Testing included chelating resins, strong acid resins, a weak acid resin, a strong base resin with and without addition of chelating agents, an inorganic oxide, inorganic ion exchangers, several zeolites, alumina, acid-activated carbon, and activated carbon impregnated with a crown ether. The results identified AMBERLYST 35, BAYER OC 1501, and AMBERLYST 15 as the most effective materials for lithium removal. It is not clear why these resins are particularly effective. It appears, however, that one of the key factors is that these are strong acid resins in the H+ form. But even among strong acid resins in the H+ form, there seems to be some differences in effectiveness. It is suspected these are due to differences in structure (eg pore size) and/or acid strength.

## Claims

1. A process for removing an alkali metal compound from an acid solution also containing nickel and aluminium compounds, comprising:
i) contacting the acid solution with a first ion exchange resin functional to remove the nickel and aluminium compounds from the acid solution; and
ii) contacting the acid solution so obtained with a second ion exchange resin functional to remove the alkali metal compound from the acid solution.

2. A process according to claim 1, wherein the acid solution was used to remove an alkali metal compound from a polymer cement.

3. A process according to claim 2 wherein the polymer cement is a low viscosity functionalised polymer cement.

4. A process according to any one of claims 1 to 3, wherein the alkali metal is lithium.

5. A process according to any one of claims 1 to 4 wherein the first ion exchange resin is a strong acid resin.

6. A process according to any one of claims 1 to 5 wherein the second ion exchange resin is a strong acid resin.

## Patentansprüche

1. Verfahren zur Abtrennung einer Alkalimetallverbindung aus einer Säurelösung, die auch Nickel- und Aluminiumverbindungen enthält, welches Verfahren umfaßt:
i) Inberührungbringen der Säurelösung mit einem ersten Ionenaustauschharz, das zur Abtrennung der Nickel- und Aluminiumverbindungen aus der Säurelösung funktional ist; und
ii) Inberührungbringen der so erhaltenen Säurelösung mit einem zweiten Ionenaustauschharz, das zur Abtrennung der Alkalimetallverbindung aus der Säurelösung funktional ist.

2. Verfahren nach Anspruch 1, worin die Säurelösung zur Abtrennung einer Alkalimetallverbindung aus einem Polymerzement verwendet worden war.

3. Verfahren nach Anspruch 2, worin der Polymerzement ein niedrigviskoser, funktionalisierter Polymerzement ist.

4. Verfahren nach einem der Ansprüche 1 bis 3, worin das Alkalimetall Lithium ist.

5. Verfahren nach einem der Ansprüche 1 bis 4, worin das erste Ionenaustauschharz ein stark saures Harz ist.

6. Verfahren nach einem der Ansprüche 1 bis 5, worin das zweite Ionenaustauschharz ein stark saures Harz ist.

## Revendications

1. Procédé pour séparer un composé de métal alcalin d'une solution d'acide contenant également des composés de nickel et d'aluminium, comprenant :
i) la mise en contact de la solution d'acide avec une première résine échangeuse d'ions fonctionnelle pour séparer les composés de nickel et d'aluminium de la solution d'acide; et
ii) la mise en contact de la solution d'acide ainsi obtenue avec une seconde résine échangeuse d'ions fonctionnelle pour séparer le composé de métal alcalin de la solution d'acide.

2. Procédé suivant la revendication 1, dans lequel la solution d'acide a été utilisée pour séparer un composé de métal alcalin d'un ciment de polymère.

3. Procédé suivant la revendication 2, dans lequel le ciment de polymère est un ciment de polymère fonctionnalisé de faible viscosité.

4. Procédé suivant l'une quelconque des revendications 1 à 3, dans lequel le métal alcalin est du lithium.

5. Procédé suivant l'une quelconque des revendications 1 à 4, dans lequel la première résine échangeuse d'ions est une résine d'acide fort.

6. Procédé suivant l'une quelconque des revendications 1 à 5, dans lequel la seconde résine échangeuse d'ions est une résine d'acide fort.
